# EUROPEAN PATENT SPECIFICATION

(11) **EP 3 248 774 B1**
(45) Date of publication and mention of the grant of the patent: **25.11.2020**
(21) Application number: 16382236.4
(22) Date of filing: 27.05.2016
(51) Int. Cl.: B32B 5/02, B32B 5/12, B32B 5/26, A62C 3/08

(54) **FIREPROOF POLYMER MATRIX COMPOSITE STRUCTURE**
STRUCTURE COMPOSITE IGNIFUGE A MATRICE POLYMERE
FEUERFESTE VERBUNDSTRUKTUR IN POLYMERMATRIX

(43) Date of publication of application: 29.11.2017
(73) Proprietor: Airbus Operations S.L., 28906 Madrid (ES)
(72) Inventor: LÓPEZ FERNÁNDEZ, David, E-28906 Getafe, Madrid (ES); GARCÍA PATINO, Maria Aránzazu, E-28906 Getafe, Madrid (ES)
(74) Representative: ABG Intellectual Property Law, S.L.

(56) References cited:
- EP-A1- 0 923 488
- WO-A1-92/17331
- WO-A1-2008/118732
- WO-A2-00/32388
- CN-U- 205 167 716
- US-A1- 2010 055 384
- US-A1- 2016 114 556

## Description

### TECHNICAL FIELD OF THE INVENTION

The present invention belongs to the field of aircraft structures and, more particularly, to the field of light polymer matrix composite structures with fireproof requirements.

### BACKGROUND OF THE INVENTION

In ordinary structures of an aircraft it is interesting to apply light structures in order to reduce weight. The common material applied in these structures is carbon fibre cured with resin. In some cases, fire requirements have to be taken also into account in the design and the selection of the material of the structure.

Until know, the only solution for light fireproof composite structures is to use Carbon Fibre Reinforced Polymer (CFRP) with a Bismaleimide (BMI) resin matrix, which is a special and expensive carbon composite fire resistant material.

EP0923488 discloses a tail cone of an aircraft comprising a lateral rotatable casing made of a composite skinned honeycomb sandwich construction. The inner and outer skin surfaces of the sandwich are made of CFRP. The CFRP consists of carbon fiber and a plastic matrix, where the plastic matrix may be an epoxy, bis-maleimide or polyimide.

Ordinary tail cones of an aircraft enclose a compartment in which the Auxiliary Power Unit (APU) of the aircraft is located. Such APU compartment is formed by mainly CFRP structural layers with an outer skin of CFRP with epoxy resin matrix and an inner skin known as Lateral Firewall of CFRP with BMI resin matrix. The Lateral Firewall protects the outer skin against fire and contains fire inside compartment complying with fire requirements.

The main drawback of the Lateral Firewall is the high cost of its manufacture and installation, and the fact that the structural elements located between the Lateral Firewall and the outer skin are hidden and cannot be inspected and repaired easily.

The present invention provides a different structural configuration combining different materials in order to fulfil fire requirements, and reduce costs in manufacture and installation. Additionally, in the particular case of a tail cone of an aircraft, the Lateral Firewall can be removed, and the fireproof polymer matrix composite structure that the present invention provides, is used as an outer skin. Thus, the structural elements are easily accessible, and the compartment fulfils the fire requirements.

Document US2016/0114556 A1 discloses a composite panel for floors or wall covering components of the partition, side panel or piece of furniture type, as well as to a method for manufacturing such a panel.

### SUMMARY OF THE INVENTION

The present invention provides an alternative solution for the aforementioned problems, by a fireproof polymer matrix composite structure according to claim 1 and an aircraft according to claim 8. In dependent claims, preferred embodiments of the invention are defined.

In a first inventive aspect, the invention provides a fireproof polymer matrix composite structure for an outer skin of a tail cone of an aircraft, comprising: a CFRP lay-up having a first side and a second side, a first GFRP layer located, on the first side of the CFRP lay-up or on the second side of the CFRP lay-up, said first GFRP layer being configured to prevent the propagation of fire through the CFRP lay-up in any of its sides, and a second GFRP layer located, on the first side or on the second side of the CFRP lay-up, said sides not being occupied by the first GFRP layer, wherein the CFRP lay-up is a tape of carbon fibre material that comprises at least eight plies of carbon fibre tape, and the first GFRP layer has a width of at least 0,066 mm.

Advantageously, the present configuration of fireproof polymer matrix composite structure prevents the propagation of fire through said structure. Additionally, the present fireproof polymer matrix composite structure reduces cost of manufacturing and installation respect to the prior art.

In a particular embodiment, the first glass fibre reinforced polymer (GFRP) layer is configured to be cured with the CFRP lay-up. Thus, the un-cured CFRP lay-up; the un-cured first GFRP layer is laid-up on the un-cured CFRP lay-up consequently, applying an adhesive layer between both un-cured lay-up in order to be cured together in an autoclave.

Throughout this document, a lay-up will be understood as providing a certain number of carbon fibres prepreg in tape or fabric in order to obtain a polymer matrix composite structure.

The present configuration of fireproof polymer matrix composite structure has been developed to be adapted in different configuration of lay-up, both on tape and on fabric.

According to the invention, a fireproof polymer matrix composite structure further comprises a second glass fibre reinforced polymer (GFRP) layer located, on the first side or on the second side of the carbon fibre reinforced polymer (CFRP) lay-up, said sides not being occupied by the first GFRP layer. In such a way, if the first GFRP layer is located on the first side of the CFRP lay-up, the second GFRP layer is located on the second side of the CFRP lay-up. Furthermore, if the first GFRP layer is located on the second side of the CFRP lay-up, the second GFRP layer will be located on the first side of the CFRP lay-up.

Advantageously, the second glass fibre reinforced polymer (GRRP) provides a very versatile fireproof polymer matrix composite structure, preventing the propagation of fire through said structure in any of the sides of the carbon fibre reinforced polymer (CFRP) lay-up.

According to the invention, CFRP lay-up is a tape of carbon fibre material that comprises at least eight plies of carbon fibre tape, and the first GFRP layer has a width of at least 0,066 mm.

In a more particular embodiment, each ply of carbon fibre tape has a width of at least 0,184 mm.

Throughout this document, tape will be understood as a composite material formed by certain number of unidirectional fibres oriented in the same direction and forming a layer.

The at least eight plies of carbon fibre tape with a width of at least 0,184 mm is the minimum number of plies necessary for the present configuration of fireproof polymer matrix composite structure. Additionally, the width of at least 0,066mm of the first GFRP and second GFRP layer is the minimum width which, in combination with said eight plies of carbon fibre tape, advantageously provides the fireproof polymer matrix composite structure that fulfils fire requirements.

As for the first GFRP, the second GFRP is configured to be cured with the CFRP lay-up and said first GFRP. Thus, the un-cured CFRP lay-up is laid-up; the un-cured first GFRP layer and second GFRP layer are laid-up on the un-cured CFRP lay-up consequently, applying an adhesive layer between the un-cured CFRP lay-up and each un-cured GFRP layer to be cured together in an autoclave.

In a more particular embodiment, each ply of carbon fibre fabric has a width of at least 0,28 mm.

Throughout this document, fabric will be understood as a composite material formed by certain number of fibres oriented in two directions and forming a layer intersecting among them. The fibres in the first direction are named as warp and the fibres in the second direction and perpendicular to warp are named as weft.

In a particular embodiment, the polymer matrix is an Epoxy resin matrix.

Advantageously, an epoxy resin matrix is easy to mould, thus it can be used in structures with a complex geometry because the epoxy resin matrix is smoother than BMI resins. Additionally, the use of an epoxy resin matrix in the present invention provides a significant cost reduction.

Advantageously, the present configuration of the fireproof polymer matrix composite structure is also appropriated and fulfils fire requirement in the cases where a structural layer with said fireproof polymer matrix composite structure comprises overlapped zones. Thus, fire will not propagate through the overlapped joints.

The use of tape or fabric of carbon fibre material depends on efforts and loads that the structure is going to support, depends on the geometry of the structure, and on the manufacturing technology.

In a second inventive aspect, the invention provides an aircraft comprising a fireproof polymer matrix composite structure according to the first inventive aspect.

In a particular embodiment, an aircraft comprises an outer skin of a fireproof polymer matrix composite structure.

In another particular embodiment, an aircraft comprises an outer door of a fireproof polymer matrix composite structure.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figures 1. This figure shows a cross section view of a fireproof polymer matrix composite structure.
Figures 2A-3B. These figures show a cross section view of a first embodiment according to the present invention wherein the CFRP lay-up is a tape of carbon fibre material.
Figures 4-5. These figures show a cross section view of a second composite, wherein the CFRP lay-up is a fabric of carbon fibre material. Figures 4-5 do not belong to the invention.
Figure 6. This figure shows a perspective view of an aircraft tail cone according to the present invention.
Figure 7. This figure shows a perspective view of an aircraft according to the present invention.

### DETAILED DESCRIPTION OF THE INVENTION

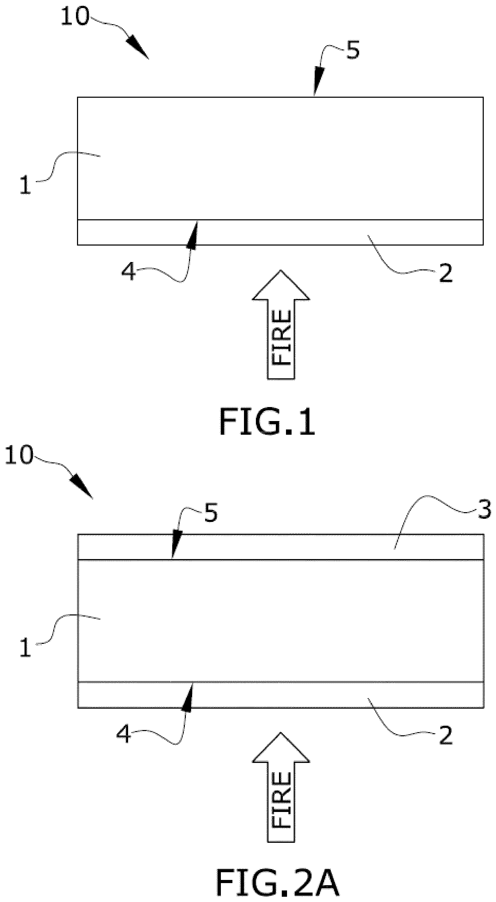

Figures 1 shows a cross section view of a fireproof polymer matrix composite structure (10) that comprises a CFRP lay-up (1) and a first GFRP layer (2). The CFRP lay-up (1) comprises a first side (4) and a second side (5), in such a way that the first GFRP layer (2) of the structure (10) is located on the first side (4) of the CFRP lay-up (1). The first GFRP layer (2) of the fireproof polymer matrix composite structure (10) is the one configured to be placed faced to a fire.

### First embodiment

Figures 2A-3B show a cross section view of a fireproof polymer matrix composite structure (10) wherein the CFRP lay-up (1) is formed by tapes of carbon fibre material.

Figure 2A shows a cross section view of a fireproof polymer matrix composite structure (10) wherein the first GFRP layer (2) is located on the first side (4) of the CFRP lay-up (1), and is placed faced to the fire. Furthermore, the fireproof polymer matrix composite structure (10) comprises a second GFRP layer (3) located on the second side (5) of the CFRP lay-up.

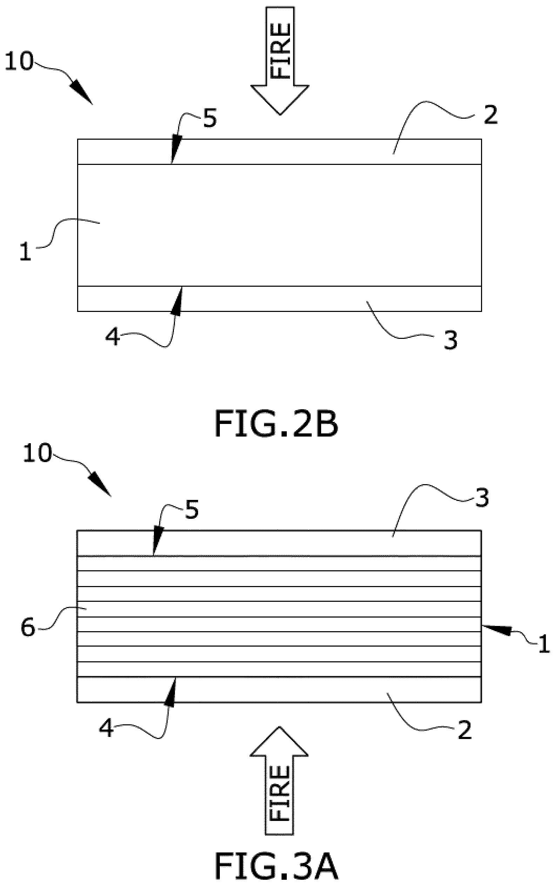

Figure 2B shows a cross section view of a fireproof polymer matrix composite structure (10) wherein the first GFRP layer (2) is located on the second side (5) of the CFRP lay-up (1), and is placed faced to the fire. Furthermore, the fireproof polymer matrix composite structure (10) comprises a second GFRP layer (3) located on the first side (4) of the CFRP lay-up.

Figure 3A-3B show the CFRP lay-up (1) arranged between the first GFRP layer (2) and the second GFRP layer (3), and wherein the CFRP lay-up (1) comprises eight plies (6) of carbon fibre tape.

Figure 3A shows a cross section view of a fireproof polymer matrix composite structure (10) wherein the first GFRP layer (2) is located on the first side (4) of the CFRP lay-up (1), and is placed faced to the fire. Furthermore, the fireproof polymer matrix composite structure (10) comprises a second GFRP layer (3) located on the second side (5) of the CFRP lay-up (1). In this example shown in figure 3A, the CFRP lay-up (1) comprises eight plies (6) of carbon fibre tape

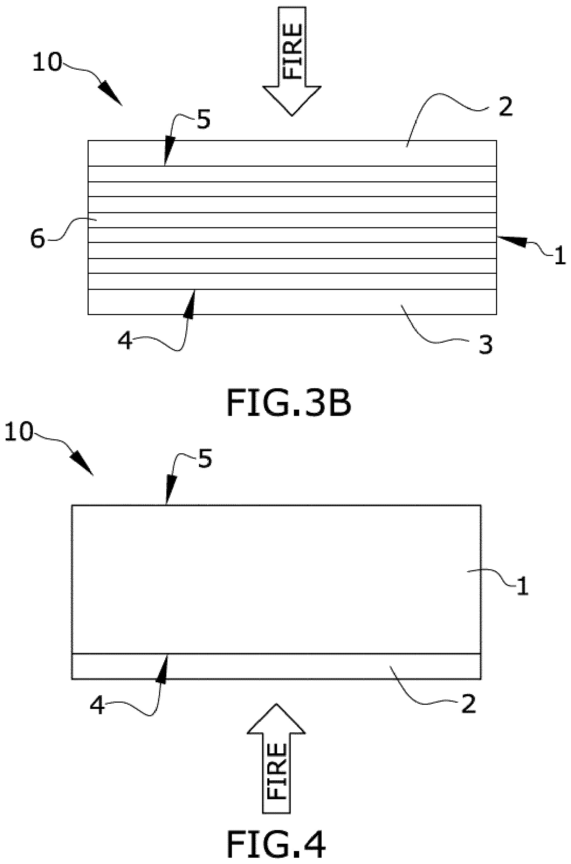

Figure 3B shows a cross section view of a fireproof polymer matrix composite structure (10) wherein the first GFRP layer (2) is located on the second side (5) of the CFRP lay-up (1), and is placed faced to the fire. Furthermore, the fireproof polymer matrix composite structure (10) comprises a second GFRP layer (3) located on the first side (4) of the CFRP lay-up (1). In this example shown in figure 3B, the CFRP lay-up (1) comprises eight plies (6) of carbon fibre tape.

In a particular example, the first GFRP layer (2) and second GFRP layer (3) have a width of 0,066mm. Also, each plies (6) of carbon fibre tape has a width of 0,184mm.

### Second embodiment

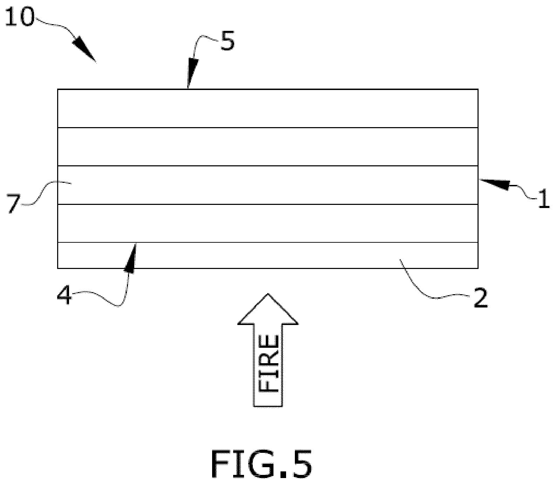

Figures 4 and 5 show a cross section view of a fireproof polymer matrix composite structure (10) wherein the CFRP lay-up (1) is formed by fabrics of carbon fibre material. In this example, the first GFRP layer (2) is placed faced to the fire.

Figure 5 shows the CFRP lay-up (1) comprising four plies (7) of carbon fibre fabric. In a particular example, the first (2) fibre glass layer has a width of 0,066mm, and, each plies (7) of carbon fibre fabric has a width of 0,28mm.

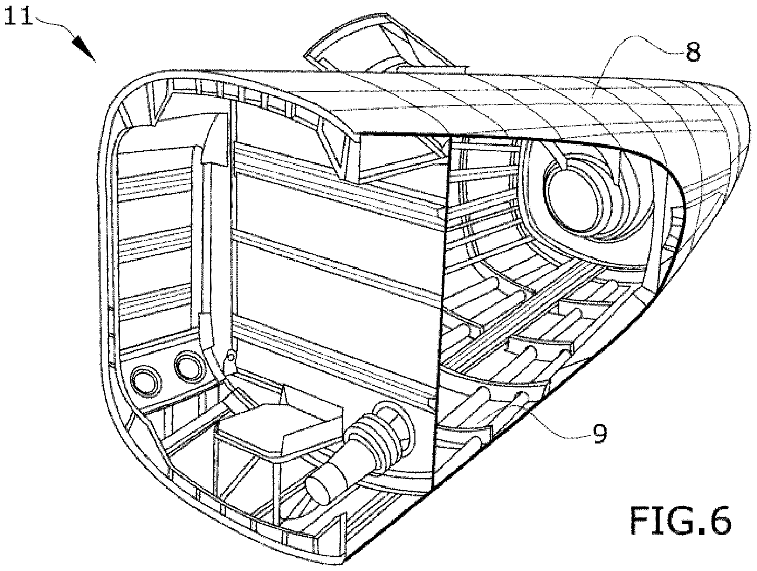

Figure 6 shows an example of a fireproof polymer matrix composite structure (10) according to any of the embodiments applied in the aeronautical field, specifically a tail cone (11) of an aircraft in which the APU is housed (not shown). The tail cone (11) comprises an outer skin (8), which covers the structure of the tail cone (11), an outer door (9), as well as structural elements ie, frames, stringers, beams...

Depending on the structural load requirements, reinforcing of some structure of the tail cone may be advisable.

The materials of the outer skin (8) and the outer door (9) of the tail cone (11) must fulfil severe fire requirements.

In a particular example, the fireproof polymer matrix composite structure (10) of the outer skin (8) comprises a tape of carbon fibre material combined with a first (2) and second (3) GFRP layer which are located on the first (4) and seconds (5) side respectively of the CFRP lay-up (1).

In this way, the first GFRP layer (2) is located inside the tail cone (11), and the second GFRP layer (3) is located outside the tail cone (11) of the aircraft. Therefore, in case the fire is generated in the APU compartment, the present fireproof polymer matrix composite structure (10) that the outer skin (8) comprises will prevent that the fire propagates outwards the tail cone (11) and propagates to other zones of the aircraft.

In a particular example not belonging to the invention, the fireproof polymer matrix composite structure (10) of the outer door (9) comprises a fabric of carbon fibre material combined with a first GFRP layer (2) which is located on the first side (4) of the CFRP lay-up (1) and inside of the aircraft. Therefore, in case the fire is generated inside the aircraft, the present fireproof polymer matrix composite structure (10) that the outer door comprises will prevent that the fire propagates outwards the aircraft.

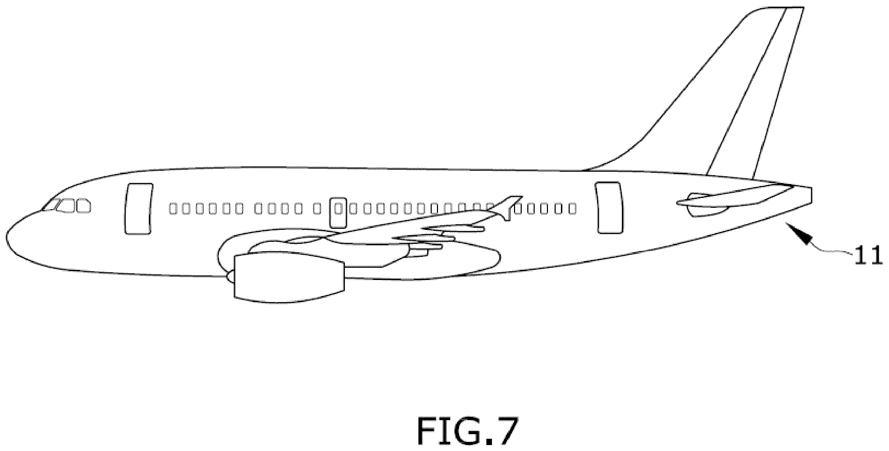

The figure 7 shows a tail cone (11) of an aircraft according to the present invention.

## Claims

1. Fireproof polymer matrix composite structure (10) for an outer skin (8) of a tail cone (11) of an aircraft, comprising:
a CFRP lay-up (1) having a first side (4) and a second side (5),
a first GFRP layer (2) located, on the first side (4) of the CFRP lay-up (1) or on the second side (5) of the CFRP lay-up (1), said first GFRP layer (2) being configured to prevent the propagation of fire through the CFRP lay-up (1) in any of its sides (4, 5), and
a second GFRP layer (3) located, on the first side (4) or on the second side (5) of the CFRP lay-up (1), said sides (4, 5) not being occupied by the first GFRP layer (2),
wherein
the CFRP lay-up (1) is a tape of carbon fibre material that comprises at least eight plies (6) of carbon fibre tape, and
the first GFRP layer (2) has a width of at least 0,066 mm.

2. Fireproof polymer matrix composite structure (10) according to claim 1, wherein each ply (6) of carbon fibre tape has a width of at least 0,184 mm.

3. Fireproof polymer matrix composite structure (10) according to any of the previous claims, wherein the polymer matrix is an Epoxy resin matrix.

4. Aircraft comprising a fireproof polymer matrix composite structure (10) according to any of claims 1 to 3.

5. Aircraft according to claim 4, comprising an outer skin (8) of a fireproof polymer matrix composite structure (10) according to any claims 1 to 3.

## Patentansprüche

1. Feuerfeste Verbundstruktur in Polymermatrix (10) für eine äußere Hülle (8) eines Heckkonus (11) eines Luftfahrzeugs, die Folgendes umfasst:
eine CFRP-Lage (1) mit einer ersten Seite (4) und
einer zweiten Seite (5),
eine sich auf der ersten Seite (4) der CFRP-Lage (1) oder auf der zweiten Seite (5) der CFRP-Lage (1) befindliche erste GFRP-Schicht (2), wobei die erste GFRP-Schicht (2) zur Vermeidung der Ausbreitung von Feuer durch die CFRP-Lage (1) in eine seiner Seiten (4, 5) ausgelegt ist, und
eine sich auf der ersten Seite (4) oder auf der zweiten Seite (5) der CFRP-Lage (1) befindliche zweite GFRP-Schicht (3), wobei die Seiten (4, 5) nicht durch die erste GFRP-Schicht (2) besetzt sind, wobei
es sich bei der CFRP-Lage (1) um ein Band aus einem Kohlenstofffaserwerkstoff handelt, der mindestens 8 Gewebelagen (6) aus Kohlenstofffaserband umfasst, und wobei die erste GFRP-Schicht (2) eine Breite von mindestens 0,066 mm aufweist.

2. Feuerfeste Verbundstruktur in Polymermatrix (10) nach Anspruch 1, wobei jede Gewebelage (6) aus Kohlenstofffaserband eine Breite von mindestens 0,184 mm aufweist.

3. Feuerfeste Verbundstruktur in Polymermatrix (10) nach einem der vorhergehenden Ansprüche, wobei es sich bei der Polymermatrix um eine Epoxidharzmatrix handelt.

4. Luftfahrzeug, umfassend eine feuerfeste Verbundstruktur in Polymermatrix (10) nach einem der Ansprüche 1 bis 3.

5. Luftfahrzeug nach Anspruch 4, umfassend eine äußere Hülle (8) einer feuerfesten Verbundstruktur in Polymermatrix (10) nach einem der Ansprüche 1 bis 3.

## Revendications

1. Structure composite ignifuge à matrice de polymère (10) pour une peau externe (8) d'un cône arrière (11) d'un aéronef, comprenant :
une superposition de couches de CFRP (1) ayant un premier côté (4) et un second côté (5),
une première couche de GFRP (2) située sur le premier côté (4) de la superposition de couches de CFRP (1) ou sur le second côté (5) de la superposition de couches de CFRP (1), ladite première couche de GFRP (2) étant conçue pour empêcher la propagation de feu dans la superposition de couches de CFRP (1) dans l'un quelconque de ses côtés (4, 5), et
une seconde couche de GFRP (3) située sur le premier côté (4) ou sur le second côté (5) de la superposition de couches de CFRP (1), lesdits côtés (4, 5) n'étant pas occupés par la première couche de GFRP (2),
dans laquelle
la superposition de couches de CFRP (1) est une bande de matériau en fibres de carbone qui comprend au moins huit plis (6) de bande de fibres de carbone et
la première couche de GFRP (2) a une largeur d'au moins 0,066 mm.

2. Structure composite ignifuge à matrice de polymère (10) selon la revendication 1, dans laquelle chaque pli (6) de bande de fibres de carbone a une largeur d'au moins 0,184 mm.

3. Structure composite ignifuge à matrice de polymère (10) selon l'une quelconque des revendications précédentes, dans laquelle la matrice de polymère est une matrice de résine époxy.

4. Aéronef comprenant une structure composite ignifuge à matrice de polymère (10) selon l'une quelconque des revendications 1 à 3.

5. Aéronef selon la revendication 4, comprenant une peau externe (8) constituée d'une structure composite ignifuge à matrice de polymère (10) selon l'une quelconque des revendications 1 à 3.
